# EUROPÄISCHE PATENTSCHRIFT

(11) **EP 0 849 222 B1**
(45) Veröffentlichungstag und Bekanntmachung des Hinweises auf die Patenterteilung: **13.06.2001**
(21) Anmeldenummer: 97120788.1
(22) Anmeldetag: 27.11.1997
(51) Int. Cl.: C01C 3/10, C01C 3/08

(54) **Verfahren zur Herstellung von Granulaten aus einem Alkali- oder Erdalkalimetallcyanid**
Process for the preparation of granules of an alkali or akaline-earth metal cyanide
Procédé de préparation de granules d'un cyanure d'un metal alcalin ou alcalino-terreux

(30) Priorität: 21.12.1996 DE 19653957
(43) Veröffentlichungstag der Anmeldung: 24.06.1998
(73) Patentinhaber: Degussa AG, 40474 Düsseldorf (DE)
(72) Erfinder: Schütte, Rüdiger, Dr., 60325 Frankfurt (DE); Alt, Hans Christian, 63571 Gelnhausen (DE); Schulze, Stefan, Dr., 63538 Grosskrotzenburg (DE)

(56) Entgegenhaltungen:
- EP-A- 0 600 211
- EP-A- 0 600 282
- CHEMICAL ABSTRACTS, vol. 123, no. 22, 27.November 1995 Columbus, Ohio, US; abstract no. 290790, JENSEN, ARNE SLOTH: "Industrial experience in pressurized steam drying of beet pulp, sewage sludge and wood chips." XP002060394 & DRYING TECHNOL. (1995), 13(5-7), 1377-93 CODEN: DRTEDQ;ISSN: 0737-3937, 1995,
- CHEMICAL ABSTRACTS, vol. 118, no. 16, 19.April 1993 Columbus, Ohio, US; abstract no. 150064, JENSEN, ARNE SLOTH: "Pressurized drying in a fluid bed with steam" XP002060395 & DRYING '92 PROC. INT. DRYING SYMP., 8TH (1992), VOLUME Part. B, 1593-1601. EDITOR(S): MUJUMDAR, ARUN S. PUBLISHER: ELSEVIER, AMSTERDAM, NETH. CODEN: 58KOA9, 1992,
- H. UHLEMANN: "Kontinuierliche Wirbelschicht-Sprühgranulation." CHEMIE INGENIEUR TECHNIK, Bd. 62, Nr. 10, 1990, VCH-VERLAG, Seiten 822-822-834, XP002060393
- A.S. JENSEN: "Industrial experience in pressurized steam drying of beet pulp, sewage sludge and wood chips", DRYING TECHNOLOGY, , 1995, Band 13, Nr. 5-7, Seiten 1377 - 1393
- Drying '92, Proc. Int. Drying Symp., 8th (1992), Ed: A.S. Mujumdar; Elsevier, Amsterdam (NL), Vol Pt. B, 1593-1601, by A.S. Jensen: Pressurized drying in a fluid bed with steam
- Coal Handling and Utilisation Conference, Sydney, 19-21 june 1990, pages 184-188, by C.J. Hamilton: Steam fluidized bed drying of coal

## Beschreibung

Die Erfindung richtet sich auf ein Verfahren zur Herstellung von Granulaten aus einem Alkali- oder Erdalkalimetallcyanid, insbesondere Granulaten aus Natriumcyanid, Kaliumcyanid oder Calciumcyanid, durch Wirbelschicht-Sprühgranulation, wobei eine Alkali- oder Erdalkalimetallcyanid enthaltende wäßrige Lösung oder Suspension auf in einer Wirbelschicht befindliche Alkalimetallcyanid-Keime aufgesprüht und Wasser mittels eines durch die Wirbelschicht strömenden Trocknungsgasstromes verdampft wird.

Alkalimetallcyanide, insbesondere Natrium- und Kaliumcyanid finden breite Anwendung in galvanischen Bädern und als Rohstoff zur Herstellung organischer Cyanoverbindungen; zur Goldgewinnung durch Cyanidlaugung goldhaltiger Erze werden Natrium- oder Calciumcyanid eingesetzt.

Während bisher festes NaCN und KCN überwiegend als Preßlinge oder staubarmes Mahlgranulat gehandelt wurde, gewinnen sogenannte Wirbelschicht-Sprühgranulate Interesse. Derartige im allgemeinen kugelförmige Wirbelschicht-Sprühgranulate lassen sich nach den in der EP-A 0 600 211 und EP-A 0 600 282 beschriebenen Verfahren herstellen. Hierbei wird eine Alkalimetallcyanidlösung, zweckmäßigerweise eine solche mit einem Gehalt von 20 bis 45 Gew.-%, in einer Vorrichtung zur Wirbelschicht-Sprühgranulation auf eine Wirbelschicht aus Alkalimetallcyanid-Keimen aufgesprüht. Mittels eines Trocknungsgases, das gleichzeitig Fluidisierungsgas ist, wird eingebrachtes Wasser verdampft. Gebildetes Granulat wird aus der Vorrichtung ausgeschleust, zweckmäßigerweise mittels einer klassierend wirkenden Austragsvorrichtung. In beiden zitierten Verfahren wird als Trocknungsgas erwärmte Luft eingesetzt.

Nachteilig am Verfahren der EP-A 0 600 211 ist die dort vorgeschlagene Zweistufigkeit: Außer der Wirbelschicht-Sprühgranulationsvorrichtung wird ein Wirbelschichttrockner benötigt. Die Sprühgranulation wird bei einer Wirbelschichttemperatur von 60 bis 90 °C durchgeführt. Weitere Nachteile sind der im Hinblick auf die Toxizität der Alkalimetallcyanide unvermeidliche Aufwand zur Nachbehandlung der gesamten Abluft sowie der hierdurch bedingte Energieverlust. Unter den angegebenen Betriebsbedingungen kommt es, wie bei der Nacharbeitung des Verfahrens festgestellt wurde, zu erheblichen Betriebsstörungen, ferner kann die Bildung von unregelmäßig geformten Agglomeraten nicht sicher vermieden werden.

Das Verfahren gemäß EP-A 0 600 282, das gegenüber dem zuvor gewürdigten zu perfekten kugelförmigen NaCN-beziehungsweise KCN-Granulaten mit geringerer Verbackungsneigung führt, arbeitet bei einer Wirbelschichttemperatur von vorzugsweise 130 bis 300 °C zwar einstufig, jedoch besteht auch hier die Notwendigkeit, die gesamte Abluft zu entgiften.

Aufgabe der vorliegenden Erfindung ist somit, ein verbessertes Verfahren zur Herstellung von Alkali- und Erdalkalimetallcyanid-Granulaten durch Wirbelschicht-Sprühgranulation unter Einsatz einer Lösung des Alkalibeziehungsweise Erdalkalimetallcyanids bereitzustellen. Das Verfahren sollte gemäß bevorzugter Ausführungsformen möglichst abgasarm und möglichst mit geringerem Energieaufwand betrieben werden können als die vorbekannten Verfahren. Zudem sollte die Qualität des Granulats, insbesondere das Nebenproduktspektrum, nicht nachteilig beeinflußt werden.

Gelöst wird die Aufgabe durch ein Verfahren zur Herstellung von Granulaten aus einem Alkali- oder Erdalkalimetallcyanid, insbesondere NaCN-, KCN- und Ca(CN)₂-Granulaten, durch Wirbelschicht-Sprühgranulation, wobei eine Alkali- oder Erdalkalimetallcyanid enthaltende wäßrige Lösung oder Suspension in einer Vorrichtung zur Wirbelschicht-Sprühgranulation auf eine Wirbelschicht aus Alkali- oder Erdalkalimetallcyanid-Keimen aufgesprüht, das Wasser mittels eines durch die Wirbelschicht strömenden Trocknungsgasstromes, dessen Eingangstemperatur 150 bis 500 °C beträgt, bei einer Wirbelschichttemperatur im Bereich von 110 bis 350 °C verdampft und Granulat aus der Vorrichtung ausgetragen wird, das dadurch gekennzeichnet ist, daß man als Trocknungsgas überhitzten Wasserdampf verwendet, wobei überhitzter Wasserdampf in einem geschlossenen Kreislauf geführt und im wesentlichen nur der aus der Verdampfung gebildete Überschußdampf aus dem Kreislauf ausgeschleust wird.

Die Unteransprüche richten sich auf bevorzugte Ausführungsformen des erfindungsgemäßen Verfahrens. Obgleich eine mit Wasserdampf betriebene Wirbelschicht aus anderen Bereichen, etwa der Kohletrocknung - siehe Coal Handling and Utilization Conference, Sydney, 19.-21.06.1990 S. 184-188, C.J. Hamilton "Steam Fluidized Bed Drying of Coal" -, bekannt war, wurde eine solche Arbeitsweise bisher nicht zur Herstellung von Granulaten von Alkalimetallcyaniden oder Erdalkalimetallcyaniden aus ihren Lösungen vorgeschlagen. Der Grund war die Befürchtung, daß es hierbei zu einer erhöhten Bildung von Formiat durch Hydrolyse des Cyanids kommen könnte, ein wohlbekanntes Problem bei der Kristallisation von z. B. NaCN. Überraschenderweise wurde aber gefunden, daß sich im erfindungsgemäßen Verfahren der Formiatgehalt der Alkali-oder Erdalkalimetallcyanid-Granulate während der Granulation nicht ändert. Da im erfindungsgemäßen Verfahren anstelle Luft überhitzter Wasserdampf als Trocknungs- und Fluidisierungsgas verwendet wird, ergibt sich auch kein CO₂-Problem und damit kein Problem mit einem zu hohen Carbonatgehalt. Die Zusammensetzung der erfindungsgemäß hergestellten Granulate entspricht im wesentlichen jener der in der eingesetzten Lösung gelösten Stoffe.

Vorzugsweise wird der überhitzte Wasserdampf mit einer Temperatur im Bereich von 200 bis 450 °C, insbesondere 300 bis 400 °C, dem Sprühgranulator zugeführt. Der überhitzte Wasserdampf dient dabei sowohl als Trocknungs- als auch als Fluidisierungsgas. Zusätzlich kann überhitzter Wasserdampf auch als Treibmittel für mittels Zweistoffdüsen zu versprühender Lösung sowie als Sichtergas bei einem Granulator mit klassierendem Granulataustrag eingesetzt werden.

Gemäß einer bevorzugten Ausführungsform werden eine wäßrige Alkalimetallcyanidlösung mit einem Gehalt von vorzugsweise 10 bis 45 Gew.-%, insbesondere 20 bis 45 Gew.-% und besonders bevorzugt 40 bis 45 Gew.-%, und überhitzter Wasserdampf in einem solchen Verhältnis dem Granulator zugeführt, daß in der Wirbelschicht eine Temperatur im Bereich von 150 bis 250 °, insbesondere 180 bis 220 °C, aufrechterhalten wird. Die zu versprühende Lösung kann auch auf den Anwendungszweck gerichtete Zusatzstoffe und/oder Hilfsstoffe zur Beeinflussung der Eigenschaften in jeweils wirksamer Menge enthalten.

Es wurde gefunden, daß die mittlere Granulatgröße von Alkalimetallcyaniden bei der Wirbelschicht-Sprühgranulation in einfacher Weise dadurch gesteuert werden kann, daß der zu versprühenden Alkalimetallcyanid-Lösung ein Alkalimetallhydroxid in einer Menge im Bereich von etwa 1 bis 5 Gew.-%, insbesondere 1,5 bis 3 Gew.-%, bezogen auf Alkalimetallcyanid zugesetzt wird. Mit zunehmender Menge Alkalimetallhydroxid nimmt die Granulatgröße zu. Bei NaCN-Granulaten mit einem Granulatdurchmesser von 1 bis 2 mm steigt der Granulatdurchmesser auf etwa 3 bis 4 mm an, wenn man die NaOH-Menge in der zu versprühenden NaCN-Lösung von 1,5 Gew.-% auf 2,5 Gew.-%, jeweils bezogen auf NaCN, erhöht. Es wurde ferner festgestellt, daß ein geringer Gehalt an Alkalimetallhydroxid, nämlich mindestens etwa 1 Gew.-%, bezogen auf Alkalimetallcyanid, in der zu versprühenden Alkalimetallcyanid-Lösung anwesend sein sollte, um eine Verfärbung (grau bis schwarz) des Granulats zu vermeiden.

Bezüglich der praktischen Durchführung der Wirbelschicht-Sprühgranulation wird auf H. Uhlemann in Chem.-Ing. Technik 62 (1990), S. 822-834 sowie die EP-A 0 600 282 verwiesen. Für eine problemlose Granulatbildung sind die Wirbelschichttemperatur, die Sprührate und die Massendichte der Keime in der Wirbelschicht aufeinander abzustimmen - diese Größen lassen sich durch Optimierung ermitteln. Eine stabile Wirbelschicht wird erreicht, wenn die Keimzahl im wesentlichen konstant bleibt. Bei zu geringer Keimzahl wird diese durch Zufuhr von feinteiligem Material, etwa Staub, aus einem dem Granulator nachgeschalteten Staubabscheider und/oder durch Erzeugung innerhalb des Granulators erhöht. Auf eine alternative Steuerungsmöglichkeit, nämlich durch den Alkalimetallhydroxidgehalt, wurde bereits zuvor eingegangen. Zweckmäßigerweise wird der Granulator kontinuierlich betrieben, indem kontinuierlich oder zumindest periodisch Granulat aus der Vorrichtung abgezogen wird, vorzugsweise mittels einer im Granulator integrierten oder diesem nachgeschalteten sichtenden Austragsvorrichtung.

Erfindungsgemäß wird überhitzter Wasserdampf in einem geschlossenen Kreislauf geführt und im wesentlichen nur der aus der Verdampfung des mit der versprühten Lösung oder Suspension eingebrachten Wassers gebildete Überschußdampf aus dem Kreislauf ausgeschleust. Der im Kreislauf geführte Dampf wird nach erneuter Überhitzung wieder dem Sprühgranulator zugeführt. Der ausgeschleuste Dampf kann in unterschiedlichster Weise weiterbehandelt werden, beispielsweise mittels einer Kombination, umfassend einen Kondensator und Wäscher oder eine Kombination, umfassend einen Kondensator und Vakuumverdampfer. Bei der Ausführungsform mit geschlossenem Dampfkreislauf und Varianten davon wird, da es zu keiner Formiat- und Carbonatbildung kommt, nicht nur ein qualitativ hochwertiges Alkalimetallcyanid- oder Erdalkalimetallcyanid-Granulat erhalten, sondern das Verfahren ist besonders abgasarm und auch bezüglich des Energieverbrauchs besonders günstig. Zusätzlich sind die Investitionskosten viel niedriger als bei Verwendung von Trocknungsluft.

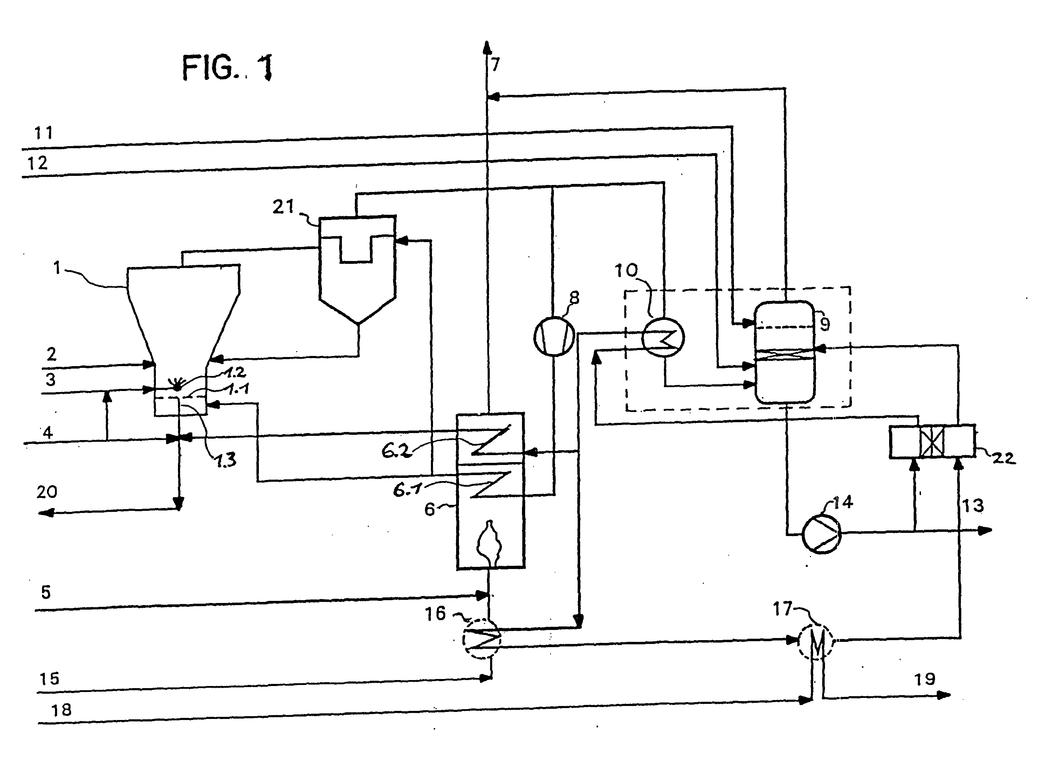

Eine besonders zweckmäßige Ausführungsart des Verfahrens der zuvor genannten Art wird anhand der Figur 1/1, welche wesentliche Teile einer Anlage in schematischer Form zeigt, erläutert.

In einen Wirbelschicht-Sprühgranulator (1) werden Keime des herzustellenden Granulats über eine Leitung (2) eingebracht. Nach Aufbau der Wirbelschicht im Reaktor mittels des unterhalb des Wirbelschichtbodens (1.1) eingeführten überhitzten Wasserdampfs wird über eine Leitung (3) die zu versprühende Alkali- oder Erdalkalimetallcyanid-Lösung der innerhalb oder oberhalb der Wirbelschicht angeordneten Sprühvorrichtung (1.2), üblicherweise Ein- oder Zweistoffdüsen, zugeführt und versprüht. Als Treibmittel zum Versprühen mittels Zweistoffdüsen wird vorzugsweise überhitzter Wasserdampf, zugeführt über Leitung (4), verwendet. Gebildetes Granulat wird über eine in den Reaktor integrierte Sichtervorrichtung (1.3) und eine Austragsleitung (20) ausgetragen. Der den Granulator (1) verlassende Dampf wird in einem Staubabscheider (21), üblicherweise ein Filter oder ein Zyklon, entstaubt. Danach gelangt der Dampf über ein Kreisgasgebläse (8) in eine in einer Brennkammer (6) angeordnete Erhitzerschlange (6.1), wobei er überhitzt und dann wieder dem Wirbelschicht-Sprühgranulator (1) zurückgeführt wird. Die Brennkammer (6) wird über Leitung (5) mit Brenngas und über eine Leitung (15) mit Verbrennungsluft, welche mittels eines Lufterhitzers (16) vorerwärmt wird, gespeist; Rauchgas verläßt die Brennkammer durch eine Leitung (7). Bei der in Fig. 1/1 dargestellten Ausführungsform befindet sich innerhalb der Brennkammer eine weitere Erhitzerschlange (6.2) zur Dampferzeugung aus Kondensat; dieser Dampf wird dem Sichter (1.3) als Sichtergas zugeführt (Alternative zur Zufuhr über Leitung (4)). Überschußdampf, der aus dem geschlossenen Kreislauf abgezogen wird, wird in einer Kombination aus einem Kondensator (10) und einer Waschvorrichtung (9) gewaschen und kondensiert. Der Wäscher (9) wird über eine Leitung (11) mit Kondensat oder Wasser und eine Leitung (12) mit Natronlauge versorgt; Natronlauge dient der Absorption von Cyanwasserstoff. Waschlauge wird über eine Pumpe (14) und einen Wärmetauscher (22) umgewälzt. Das cyanidhaltige Kondensat wird aus dem Waschkreislauf über eine Leitung (13) ausgeschleust. Über eine Leitung (18) zugeführtes Kühlwasser durchströmt einen Kühler (17) und verläßt das System durch eine Leitung (19). Ein Wasserkreislauf, der unter anderem die Kondensation des Überschußdampfes bewirkt, umfaßt den Vorerhitzer (16), den Kühler (17), den Wärmetauscher (22) und den Kondensator (10).

Einziges Abgas des Verfahrens ist Rauchgas, dessen Energieinhalt in der Brennkammer zum Überhitzen des Kreislaufdampfes dient. Bei Bedarf kann zusätzlich Dampf erzeugt werden und beispielsweise für das Betreiben eines Dampfstrahlgebläses für einen Vakuumverdampfer genutzt werden. Der Energieverbrauch des Verfahrens kann durch Ausnutzung der Neutralisationswärme aus einer dem Sprühreaktor vorgeschalteten Vorrichtung zur Herstellung der Alkali- oder Erdalkalimetallcyanidlösung aus einer wäßrigen Lösung oder Suspension des entsprechenden Hydroxids und gasförmigem oder flüssigem Cyanwasserstoff oder einem HCN enthaltenden Gas weiter reduziert werden. Durch die abgasarme Fahrweise werden der Energiebedarf und Investitionsbedarf des Verfahrens gegenüber vorbekannten Verfahren wesentlich reduziert. Zudem führt das Verfahren nicht zu einem Anstieg der Nebenprodukte, sondern zu Granulaten mit herausragenden Stoffdaten.

### Beispiel

In einer Technikumsanlage gemäß Figur 1/1 werden Natriumcyanid-Granulate erzeugt.

Eingesetzt wurde eine NaCN-Lösung mit einem NaCN-Gehalt von 430 g/l. Zusätzlich wurden dieser Lösung zunächst 7 g NaOH/l zugesetzt. Die Sprührate betrug 120 kg/h.

Der Granulator wurde mit überhitztem Wasserdampf betrieben: Eingangstemperatur 380 °C, Menge 1000 - 1200 m³/h.

Der den Granulator verlassende Dampf hatte eine Temperatur von ca. 200 °C; die Temperatur der Wirbelschicht lag zwischen 200 und 220 °C (abhängig von der Positionierung des Thermometers).

Erhalten wurde farbloses NaCN-Granulat, dessen Formiatgehalt und Carbonatgehalt gegenüber den Werten der eingesetzten Lösung unverändert waren. Über 90 % der Granulatpartikel hatten einen Durchmesser von 1 bis 2 mm.

Durch Erhöhung des NaOH-Gehalts in der NaCN-Lösung auf 10 g/l stieg der Durchmesser der Partikel auf 3 bis 4 mm an.

## Patentansprüche

1. Verfahren zur Herstellung von Granulaten aus einem Alkali- oder Erdalkalimetallcyanid, insbesondere NaCN-, KCN- und Ca(CN)₂-Granulaten, durch Wirbelschicht-Sprühgranulation, wobei eine Alkali- oder Erdalkalimetallcyanid enthaltende wäßrige Lösung oder Suspension in einer Vorrichtung zur Wirbelschicht-Sprühgranulation auf eine Wirbelschicht aus Alkali-oder Erdalkalimetallcyanid-Keimen aufgesprüht, das Wasser mittels eines durch die Wirbelschicht strömenden Trocknungsgasstromes, dessen Eingangstemperatur 150 bis 500 °C beträgt, bei einer Wirbelschichttemperatur im Bereich von 110 bis 350 °C verdampft und Granulat aus der Vorrichtung ausgetragen wird,
dadurch gekennzeichnet, daß man als Trocknungsgas überhitzten Wasserdampf verwendet, wobei überhitzter Wasserdampf in einem geschlossenen Kreislauf geführt und im wesentlichen nur der aus der Verdampfung gebildete Überschußdampf aus dem Kreislauf ausgeschleust wird.

2. Verfahren nach Anspruch 1,
dadurch gekennzeichnet,
daß man überhitzten Wasserdampf mit einer Temperatur im Bereich von 200 bis 450 °C einsetzt.

3. Verfahren nach Anspruch 1 oder 2,
dadurch gekennzeichnet,
daß man die Sprühgranulation bei einer Wirbelschichttemperatur im Bereich von 150 bis 250 °C, insbesondere 180 bis 220 °C, durchführt.

4. Verfahren nach einem der Ansprüche 1 bis 3,
dadurch gekennzeichnet,
daß man den aus der Wirbelschicht austretenden Wasserdampf nach Passage eines Staubabscheiders in zwei Teilströme trennt, den ersten Teilstrom durch eine Brennkammer leitet und den dabei erhaltenen überhitzten Wasserdampf wieder als Trocknungsgas verwendet, und den zweiten Teilstrom, entsprechend im wesentlichen der Menge des Überschußdampfes, aus dem Kreislauf ausschleust und auswäscht und/oder kondensiert.

5. Verfahren nach einem der Ansprüche 1 bis 4,
dadurch gekennzeichnet,
daß man zur Herstellung eines Alkalimetallcyanid-Granulats der zu versprühenden Alkalimetallcyanidlösung 1 bis 5 Gew.-%, vorzugsweise 1,5 bis 3 Gew.-%, Alkalimetallhydroxid, bezogen auf Alkalimetallcyanid, zusetzt.

## Claims

1. Process for the production of granulates from an alkali or alkaline earth metal cyanide, in particular NaCN, KCN and Ca(CN)₂ granulates, by fluidised bed spray granulation, wherein an aqueous solution or suspension containing alkali or alkaline earth metal cyanide is sprayed onto a fluidised bed of alkali metal or alkaline earth metal cyanide nuclei in a fluidised bed spray granulation apparatus, the water is vaporised at a fluidised bed temperature in the range from 110 to 350°C by means of a stream of drying gas flowing through the fluidised bed, the inlet temperature of which gas is 150 to 500°C, and granulate is output from the apparatus,
characterised in that
superheated steam is used as the drying gas, wherein superheated steam is circulated in a closed circuit and substantially only the excess steam formed from the vaporisation is discharged from the circuit.

2. Process according to claim 1,
characterised in that
superheated steam is used at a temperature in the range from 200 to 450°C.

3. Process according to claim 1 or 2,
characterised in that
spray granulation is performed at a fluidised bed temperature in the range from 150 to 250°C, in particular from 180 to 220°C.

4. Process according to one of claims 1 to 3,
characterised in that,
after passing through a dust separator, the steam leaving the fluidised bed is divided into two sub-streams, the first sub-stream is passed through a combustion chamber and the superheated steam so obtained is reused as the drying gas, and the second sub-stream, substantially corresponding to the quantity of excess steam, is discharged from the circuit and scrubbed and/or condensed.

5. Process according to one of claims 1 to 4,
characterised in that,
in order to produce alkali metal cyanide granulates, 1 to 5 wt.%, preferably 1.5 to 3 wt.%, of alkali metal hydroxide, relative to alkali metal cyanide, is added to the alkali metal cyanide solution to be sprayed.

## Revendications

1. Procédé de production de granulés d'un cyanure de métal alcalin ou de métal alcalino-terreux, en particulier des granulés de NaCN, KCN et de Ca(CN)₂ par granulation par pulvérisation en lit fluidifié, dans lequel une solution ou suspension aqueuse contenant un cyanure de métal alcalin ou alcalino-terreux est pulvérisée sur un lit fluidifié à base de germes de cyanure de métal alcalin ou de métal alcalino-terreux dans un dispositif de granulation par pulvérisation en lit fluidifié, dans lequel on évapore l'eau à l'aide d'un courant de gaz de séchage qui s'écoule dans le lit fluidifié dont la température d'entrée s'élève de 150 à 500°C, à une température de lit fluidifié dans la plage de 110 à 350°C, et dans lequel le granulé est déchargé du dispositif,
caractérisé en ce qu'
on utilise comme gaz de séchage de la vapeur d'eau surchauffée, dans lequel la vapeur d'eau surchauffée est menée en circuit fermé et dans lequel on n'évacue du circuit essentiellement que la vapeur en excès formée à partir de l'évaporation.

2. Procédé selon la revendication 1,
caractérisé en ce qu'
on met en oeuvre de la vapeur d'eau surchauffée ayant une température dans la plage de 200 à 450°C.

3. Procédé selon la revendication 1 ou 2,
caractérisé en ce qu'
on effectue la granulation par pulvérisation à une température de lit fluidifié dans la plage allant de 150 à 250°C, en particulier de 180 à 220°C.

4. Procédé selon l'une quelconque des revendications 1 à 3,
caractérisé en ce qu'
on divise la vapeur d'eau sortant du lit fluidifié après avoir passé un séparateur de poussière, en deux courants partiels, on conduit le premier courant partiel à travers une chambre de chauffage et on utilise à nouveau comme gaz de séchage la vapeur d'eau surchauffée obtenue de cette manière, et on évacue le deuxième courant partiel qui correspond essentiellement à la quantité de vapeur en excès, en dehors du circuit et on le lave complètement et/ou le condense.

5. Procédé selon l'une quelconque des revendications 1 à 4,
caractérisé en ce qu'
en vue de la production d'un granulé de cyanure de métal alcalin, on ajoute à la solution de cyanure de métal alcalin à pulvériser, de 1 à 5 % en poids, de préférence de 1,5 à 3 % en poids d'hydroxyde de métal alcalin rapporté au cyanure de métal alcalin.
